# EUROPEAN PATENT SPECIFICATION

(11) **EP 3 228 525 B1**
(45) Date of publication and mention of the grant of the patent: **18.09.2019**
(21) Application number: 17160204.8
(22) Date of filing: 09.03.2017
(51) Int. Cl.: B62D 7/04

(54) **POWERED STEERING TROLLEY AND TRANSPORT VEHICLE PROVIDED WITH SUCH TROLLEY**
WAGEN MIT SERVOLENKUNG UND TRANSPORTFAHRZEUG MIT SOLCH EINEM WAGEN
CHARIOT DE DIRECTION ASSISTÉE ET VÉHICULE DE TRANSPORT ÉQUIPÉ D'UN TEL CHARIOT

(30) Priority: 09.03.2016 IT UA20161509
(43) Date of publication of application: 11.10.2017
(73) Proprietor: COMETTO S.p.A., 12011 Borgo San Dalmazzo (IT)
(72) Inventor: TERZUOLO, Pierluigi, 12100 CUNEO (IT); LIPPI, Fabrizio, 12010 VIGNOLO (IT)
(74) Representative: Lovino, Paolo

(56) References cited:
- DE-A1- 19 948 486

## Description

The invention relates to a powered steering trolley.

In the field of transport by means of tired vehicles, trailers are used, which comprise a chassis defining a loading plane and a plurality of steering trolleys, which are distributed under the loading plane.

Each trolley comprises a structure of its own, which is coupled to the chassis by means of a fifth wheel coupling, so as to rotate in an idle manner about a vertical axis orthogonal to the loading plane.

Each trolley further comprises a powered rear axle, which has wheels that rotate about a fixed axis, and a pair of front steering twin wheels, which are idle.

The front steering wheels are arranged on the sides of the structure and are mounted on respective hubs, which are singularly hinged to the structure, laterally project from the structure and are operated by respective hydraulic actuators.

Even though they are used because they are stable and capable of supporting heavy loads, known transport vehicles of the type described above are scarcely satisfying, especially due to the fact that they require relatively large manoeuvring spaces, in particular when the driving direction needs to be suddenly changed.

This is basically due to the way in which the trolleys are designed, in particular to the fact the front steering wheels, as they are arranged on the sides of the structure, have limited steering angles. These angles can slightly be increased, but at the expense of the width of the trolley.

As a consequence, the vehicle, during manoeuvring or changes of direction, always follows curved trajectories with steering radii that are determined by the features of the trolleys.

A different kind of steering trolley is disclosed in DE 199 48 48 6 A1.

The object of the invention is to provide a powered steering trolley, which allows manufacturers to solve the aforementioned problems in a simple and economic manner and, at the same time, is stable and relatively small-sized.

According to the invention, there is provided a powered steering trolley, as claimed in claim 1.

The invention further relates to a powered transport vehicle.

According to the invention, there is provided a transport vehicle as claimed in claim 9.

The invention will now be described with reference to the accompanying drawings, which show a non-limiting embodiment thereof, wherein:
figure 1 shows, in front elevation, a preferred embodiment of a tired vehicle according to the invention;
figure 2 is a perspective view of a preferred embodiment of a trolley of the vehicle of figure 1 according to the invention;
figures 3 and 4 are a side elevation view and a front view, respectively, of the trolley of figure 2; and
figure 5 is a view from above of the trolley of figures 2 to 4 arranged in a different functional condition.

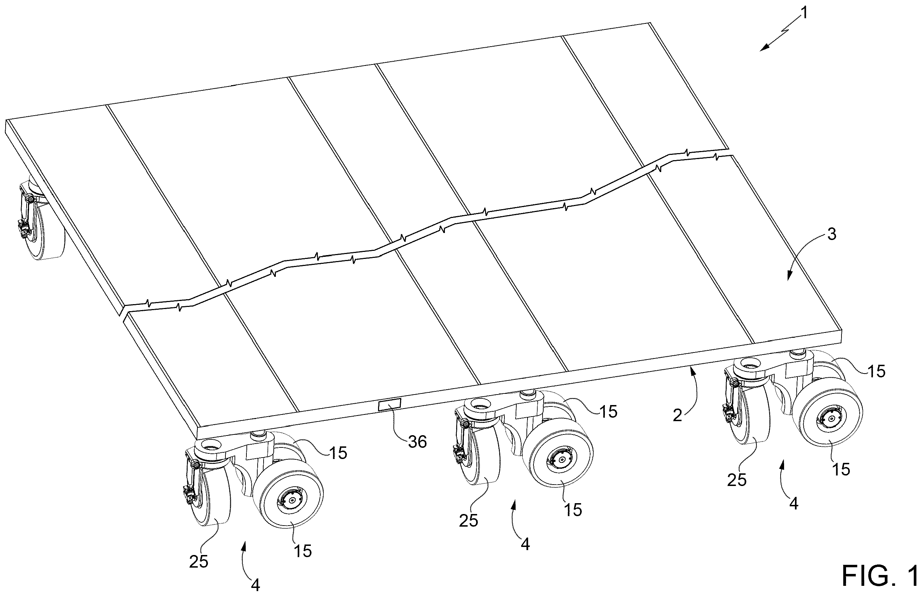

In figure 1, number 1 indicates, as a whole, a powered tired vehicle comprising a chassis 2 defining a loading area 3 and a plurality of powered isostatic trolleys 4, which are arranged under the chassis 2 in positions spaced apart from one another and are coupled to the chassis 2, as we will explain more in detail below.

Each trolley 4 is a steering trolley with a controlled steering independent of the other trolleys 4 and comprises a structure 6 or supporting frame of its own, which has, in side elevation, the shape of an upside-down L.

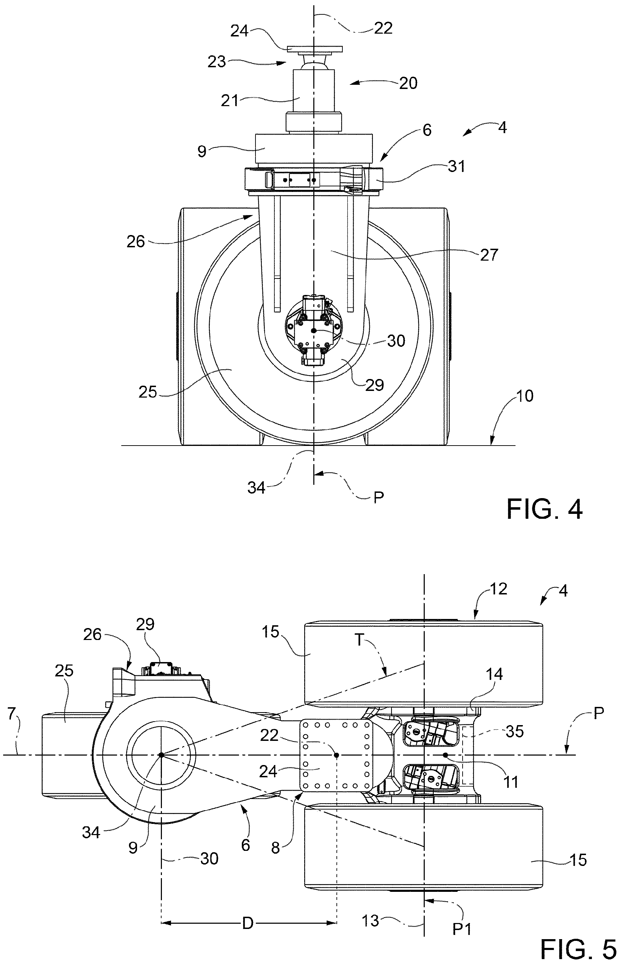

Each structure 6 has a longitudinal symmetry plane, having an outline indicated by P in figure 5, and comprises, aligned with one another in a longitudinal direction 7 lying on the plane P, an upright 8 and a beam 9 projecting from the upright 8.

Each upright 8 comprises a lower end portion 9 close to a vehicle rolling plane 10, outside which there is steadily connected an intermediate portion 11 of a fixed axle 12 having an axis 13 orthogonal to the plane P. The intermediate portion 11 is arranged on the opposite side of the upright 8 relative to the projecting beam 9 and supports two hubs 14, which are coaxial to the axis 13 and are opposite one another along the axis 13.

A respective wheel 15 is mounted on each hub 14. Alternatively, a pair of twin wheels is mounted on each hub 14. Regardless of the number of wheels 15, the length of the axle 12 is chosen in such a way that the wheels 15 are arranged alongside the upright 8, as it can be seen in figure 5, so as to minimize the space taken up by the trolley 4 in a direction orthogonal to the longitudinal plane P.

Each hub 14 further carries a hydraulic braking device 16 for braking the respective wheel 15.

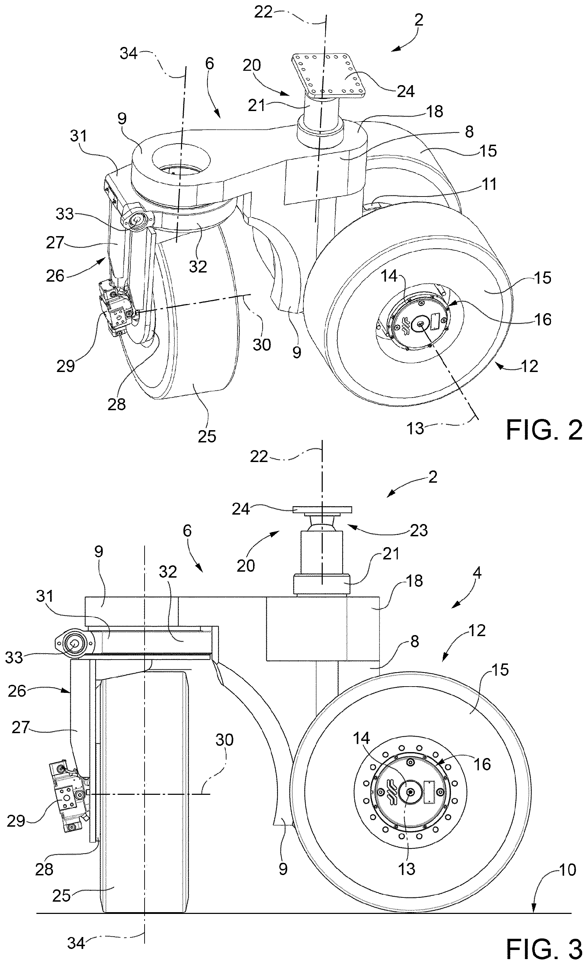

With reference to figures 2, 3 and 4, each upright 8 further comprises a respective upper end portion 18, which is opposite the portion 9A and supports a ball joint device 20, which is adjustable in height and is used as a coupling of the structure 6 to the chassis 2.

The device 20 comprises a linear actuator 21, conveniently a hydraulic plunger, extending along a hinge axis 22 orthogonal to the axis 13, eccentric relative to the axis 13 and lying on the longitudinal plane P (figure 4) .

Each actuator 21 comprises a jacket extending upwards from the portion 18 and connected in an integral manner to the portion 18 as well as a rod ending with a ball seat of a ball joint 23. The joint comprises a ball head engaging the seat, integral to an attachment plate 24 screwed on the chassis 2 and having a centre lying on the plane P.

With reference to figures 2 to 5, again, each trolley 4 further comprises a steering drive wheel 25. Each wheel 25 is supported by a respective bracket 26 with the shape of an upside-down L, which extends under the beam 9.

Each bracket 26 comprises a vertical attachment arm 27, having a lower end from which an hub 28 projects for attachment of the respective wheel 25. The hub 28 is operated by a motor-reducer 29 coupled to the arm 27 so as to rotate the wheel 25 about an axis 30 orthogonal to the axis 22.

Each bracket 26 further comprises a horizontal arm 31, which extends above the respective wheel 25 and is coupled to the beam 9 by means of a fifth wheel coupling 32 operated by a motor-reducer assembly 33. The motor-reducer 33 rotates the bracket 26 and, hence, the wheel 25 in opposite directions about a hinge axis 34 lying on the longitudinal plane P, parallel to the axis 22 and orthogonal to the axes 13 and 30.

With reference to figure 5, the distance D of the axis 34 from the axis 22 is chosen in such a way that the axis 22 intersects the barycentre of a stability triangle T having a vertex intersected by the axis 34 and the other two vertices lying on a lying plane P1 of the axis 13 and parallel to the axes 22 or 34. Conveniently, the aforesaid triangle is an isosceles triangle. These arrangements allow manufactures to obtain an isostatic trolley 4 with small dimensions in the longitudinal direction 7.

With reference to figure 5, again, each trolley 4 has its own control unit 35, which is known and schematically shown in figure 5 and, in turn, is connected to a control unit 36 of the vehicle 1 (figure 1), which is also known and schematically shown and can be controlled remotely.

In use, considering - for the purpose of an easier explanation - one single trolley 4 arranged in the configuration with aligned wheels shown in figure 5, by rotating the drive wheel 25 about the axis 23 and by simultaneously operating the motor-reducer 29, the direction of the vehicle 1 can be changed, with continuity, between two directions forming a 90° angle between each other.

On the other hand, by keeping the vehicle 1 still and by operating the respective motor-reducer 33, the respective drive wheel 25 can be rotated about the axis 34 by 90° between the aforesaid angular position with aligned wheels (figure 5) and a position with crossed wheels, shown in figures 2 to 4.

At this point, after having established the new direction in which to move the trolley, by operating the motor-reducer 29 and by keeping the motor-reducer 33 still, the structure 6 of the trolley 4 can be rotated about the hinge axis 22 relative to the chassis 2 by an angle that is such as to arrange the wheels 15 in a position aligned with the new desired direction.

At the end of the rotation of the structure, the wheel 25 is rotated again so as to be aligned with the wheels 15. Now the vehicle 1 is ready to be moved in the new desired direction.

Owing to the above, it is evident that the trolleys 4 allow to choose any direction between two orthogonal directions, without the need for the vehicle 1 to follow any intermediate curved trajectory. Therefore, by so doing, the necessary manoeuvring space can be reduced.

This possibility of adjusting the movement direction leads to minimum manoeuvring spaces when the movement direction is changed by 90°. In this case, the vehicle moving in a first direction is simply stopped in order to start again in the orthogonal direction.

Owing to the above, it is evident that the vehicle 1 and the trolleys 4 described above can be subjected to changes and variants, without for this reason going beyond the scope of protection defined by the independent claims.

In particular, each trolley 4 could comprise a number of wheels different from the one described by way of example; the structure 6 could also be different from the one described above, but - anyway - it will be such as to permit the rotation of the steering wheel/s 25 by at least 90° about the axis 34.

## Claims

1. Powered steering trolley (4) comprising a supporting structure (6), at least one axle (12) connected to said structure (6) and having at least one pair of wheels (15) rotating about a common axis (13), and relative mobility means (20) for movement of said structure relative to a load to be transported, said structure having a longitudinal symmetry plane (P) orthogonal to said common axis (13) and comprising an upright (8) carrying said axle (12) and said relative mobility means (20); said structure (6) also comprising a connecting portion (9) projecting in a cantilever manner from an upper end portion (18) of said upright (8), at least one powered driving steering wheel (25), hinge means (26,32) for coupling of said steering wheel (25) to said cantilever portion (9) in a rotating manner about a hinge axis (22) orthogonal to said common axis (13) and lying on said longitudinal symmetry plane (P) and powered actuator means (33) for rotating said steering wheel (25) about said hinge axis (34) between two angular end positions forming, between them, an angle of at least 90°; **characterized in that** said relative mobility means (20) are arranged between said hinge axis (34) and a lying plane (P1) on which said common axis (13) lies and parallel to said hinge axis (34), and are intersected by said symmetry plane (P); said relative mobility means (20) comprising a ball joint (23), said ball joint comprising a ball head having a centre of rotation lying on said symmetry plane (P); and by comprising a linear actuator (21) interposed between said upright (8) and said ball joint (23) to move said ball joint (23) away from and towards said upright (8) in a direction (22) parallel to said hinge axis (34).

2. Trolley according to claim 1, **characterized in that** said powered steering wheel (25) is arranged under said cantilever projecting portion (9).

3. Trolley according to claim 1, **characterized in that** said centre coincides with the barycentre of a triangle having one of the vertices arranged on said hinge axis (34) and the other two vertices lying on said lying plane (P1).

4. Trolley according to any one of the preceding claims, **characterized in that** said hinge means (26,32) comprise a connection bracket (26) supporting in a cantilever manner a hub (28) of said steering wheel (25) and a powered fifth wheel (32) coupling, interposed between said bracket (26) and said cantilever portion (9).

5. Trolley according to any one of the preceding claims, **characterized in that** the wheels (15) of said axle (12) are arranged on opposite longitudinal sides of said upright (8).

6. Trolley according to any one of the preceding claims, **characterized in that** said supporting structure (6) has the shape of an upside-down L.

7. Trolley according to any of the preceding claims, **characterized by** comprising an own control unit (35).

8. Trolley according to any of the preceding claims, **characterized in that** in both said two angular end positions said hinge axis (34) lies on the longitudinal symmetry plane (P), parallel to the axis (22) and orthogonal to both common axis (13) and the axis of rotation (30) of said steering wheel (25).

9. Transport vehicle (1) comprising a chassis (2) delimiting a loading area (3) and a plurality of supporting trolleys (4) arranged at least partially under said chassis and each made according to claim 1.

## Patentansprüche

1. Angetriebener Lenktrolley (4), umfassend ein Tragwerk (6), mindestens eine Achse (12), die mit dem Tragwerk (6) verbunden ist und mindestens ein Paar Räder (15) aufweist, die sich um eine gemeinsame Achse (13) drehen, und Relativbewegungsmittel (20) zum Bewegen des Tragwerks relativ zu einer zu transportierenden Last, wobei das Tragwerk eine Längssymmetrieebene (P) senkrecht zu der gemeinsamen Achse (13) aufweist und eine Stütze (8) umfasst, die die Achse (12) und die Relativbewegungsmittel (20) trägt; wobei das Tragwerk (6) ferner einen Verbindungsabschnitt (9), der als Ausleger von einem oberen Endabschnitt (18) der Stütze (8) vorsteht, mindestens ein angetriebenes Steuerrad (25), Gelenkmittel (26, 32) zum Koppeln des Lenkrads (25) mit dem Auslegerabschnitt (9), so dass es um eine Gelenkachse (22) senkrecht zu der gemeinsamen Achse (13) drehbar ist und in der Längssymmetrieebene (P) liegt, und angetriebene Antriebsmittel (33) zum Drehen des Lenkrads (25) um die Gelenkachse (34) zwischen zwei Winkelendpositionen, die zwischen sich einen Winkel von mindestens 90° bilden, umfasst; **dadurch gekennzeichnet, dass** die Relativbewegungsmittel (20) zwischen der Gelenkachse (34) und einer Lagenebene (P1), auf der die gemeinsame Achse (13) liegt, und parallel zu der Gelenkachse (34) angeordnet sind und durch die Symmetrieebene (P) geschnitten werden; wobei die Relativbewegungsmittel (20) ein Kugelgelenk (23) umfassen, wobei das Kugelgelenk einen Kugelkopf umfasst, der ein auf der Symmetrieebene (P) liegendes Drehzentrum aufweist; und wobei sie einen Linearaktuator (21) umfassen, der zwischen der Stütze (8) und dem Kugelgelenk (23) angeordnet ist, um das Kugelgelenk (23) von der Stütze (8) weg und zu dieser hin in einer Richtung (22) parallel zu der Gelenkachse (34) zu bewegen.

2. Trolley nach Anspruch 1, **dadurch gekennzeichnet, dass** das angetriebene Steuerrad (25) unterhalb des vorstehenden Auslegerabschnitts (9) angeordnet ist.

3. Trolley nach Anspruch 1, **dadurch gekennzeichnet, dass** das Zentrum mit dem Schwerpunkt eines Dreiecks zusammenfällt, wovon einer der Eckpunkte auf der Gelenkachse (34) angeordnet ist und die anderen zwei Eckpunkte auf der Lagenebene (P1) liegen.

4. Trolley nach einem der vorhergehenden Ansprüche, **dadurch gekennzeichnet, dass** die Gelenkmittel (26, 32) einen Verbindungswinkel (26), der wie ein Ausleger eine Nabe (28) des Lenkrads (25) hält, und eine angetriebene Kopplung für ein fünftes Rad (32), die zwischen dem Winkel (26) und dem Auslegerabschnitt (9) angeordnet ist, umfassen.

5. Trolley nach einem der vorhergehenden Ansprüche, **dadurch gekennzeichnet, dass** die Räder (15) der Achse (12) an gegenüberliegenden Längsseiten der Stütze (8) angeordnet sind.

6. Trolley nach einem der vorhergehenden Ansprüche, **dadurch gekennzeichnet, dass** das Tragwerk (6) die Form eines auf dem Kopf stehenden L aufweist.

7. Trolley nach einem der vorhergehenden Ansprüche, **dadurch gekennzeichnet, dass** er eine eigene Steuereinheit (35) umfasst.

8. Trolley nach einem der vorhergehenden Ansprüche, **dadurch gekennzeichnet, dass** in beiden Winkelendpositionen die Gelenkachse (34) auf der Längssymmetrieebene (P) parallel zu der Achse (22) und senkrecht zu der gemeinsamen Achse (13) und der Drehachse (30) des Lenkrads (25) liegt.

9. Transportfahrzeug (1), umfassend ein Chassis (2), das einen Ladebereich (3) begrenzt, und mehrere Tragtrolleys (4), die mindestens teilweise unter dem Chassis angeordnet sind und von denen jeder nach Anspruch 1 hergestellt ist.

## Revendications

1. Chariot à direction assistée (4) comprenant une structure de support (6), au moins un essieu (12) raccordé à ladite structure (6) et ayant au moins une paire de roues (15) tournant autour d'un axe commun (13), et des moyens de mobilité relative (20) pour le déplacement de ladite structure par rapport à une charge à transporter, ladite structure ayant un plan de symétrie longitudinal (P) orthogonal audit axe commun (13) et comprenant un montant (8) portant ledit essieu (12) et lesdits moyens de mobilité relative (20) ; ladite structure (6) comprenant également une partie de raccordement (9) faisant saillie en porte-à-faux à partir d'une partie d'extrémité supérieure (18) dudit montant (8), au moins une roue motrice directrice (25), des moyens de charnière (26, 32) pour le couplage de ladite roue directrice (25) à ladite partie en porte-à-faux (9) d'une manière rotative autour d'un axe de charnière (22) orthogonal audit axe commun (13) et se trouvant sur ledit plan de symétrie longitudinal (P) et des moyens d'actionneur motorisés (33) pour faire tourner ladite roue directrice (25) autour dudit axe de charnière (34) entre deux positions d'extrémité angulaires formant, entre elles, un angle d'au moins 90° ; **caractérisé en ce que** lesdits moyens de mobilité relative (20) sont agencés entre ledit axe de charnière (34) et un plan de pose (P1) sur lequel ledit axe commun (13) se trouve et parallèle audit axe de charnière (34), et sont coupés par ledit plan de symétrie (P) ; lesdits moyens de mobilité relative (20) comprenant un joint à rotule (23), ledit joint à rotule comprenant une tête sphérique ayant un centre de rotation qui se trouve sur ledit plan de symétrie (P) ; et par le fait de comprendre un actionneur linéaire (21) intercalé entre ledit montant (8) et ledit joint à rotule (23) pour déplacer ledit joint à rotule (23) à distance et vers ledit montant (8) dans une direction (22) parallèle audit axe de charnière (34).

2. Chariot selon la revendication 1, **caractérisé en ce que** ladite roue motrice directrice (25) est agencée sous ladite partie en saillie en porte-à-faux (9).

3. Chariot selon la revendication 1, **caractérisé en ce que** ledit centre coïncide avec le barycentre d'un triangle ayant l'un des sommets agencés sur ledit axe de charnière (34) et les deux autres sommets se trouvant sur ledit plan de pose (P1).

4. Chariot selon l'une quelconque des revendications précédentes, **caractérisé en ce que** lesdits moyens de charnière (26, 63) comprennent une console de raccordement (26) supportant, en porte-à-faux, un moyeu (28) de ladite roue directrice (25) et un couplage de cinquième roue motorisée (32), intercalé entre ladite console (26) et ladite partie en porte-à-faux (9).

5. Chariot selon l'une quelconque des revendications précédentes, **caractérisé en ce que** les roues (15) dudit essieu (12) sont agencées sur les côtés longitudinaux opposés dudit montant (8).

6. Chariot selon l'une quelconque des revendications précédentes, **caractérisé en ce que** ladite structure de support (6) a la forme d'un L retourné.

7. Chariot selon l'une quelconque des revendications précédentes, **caractérisé en ce qu'**il comprend sa propre unité de commande (35).

8. Chariot selon l'une quelconque des revendications précédentes, **caractérisé en ce que** dans lesdites deux positions d'extrémité angulaires, ledit axe de charnière (34) se trouve sur le plan de symétrie longitudinal (P), parallèle à l'axe (22) et orthogonal à la fois à l'axe commun (13) et à l'axe de rotation (30) de ladite roue directrice (25).

9. Véhicule de transport (1) comprenant un châssis (2) délimitant une zone de chargement (3) et une pluralité de chariots de support (4) agencés au moins partiellement sous ledit châssis et chacun réalisé selon la revendication 1.
